# FASCICULE DE BREVET EUROPEEN

(11) **EP 4 284 665 B1**
(45) Date de publication et mention de la délivrance du brevet: **09.10.2024**
(21) Numéro de dépôt: 21851814.0
(22) Date de dépôt: 08.12.2021
(51) Int. Cl.: B60H 1/34

(54) **DISPOSITIF D'AÉRATION À BRUIT RÉDUIT**
GERÄUSCHARME LÜFTUNGSVORRICHTUNG
LOW-NOISE VENTILATION DEVICE

(30) Priorité: 26.01.2021 FR 2100701
(43) Date de publication de la demande: 06.12.2023
(73) Titulaire: Stellantis Auto SAS, 78300 Poissy (FR)
(72) Inventeur: BOUVERET, Thomas, 92370 Chaville (FR)
(86) Numéro de dépôt international: PCT/FR2021/052239
(87) Numéro de publication internationale: WO 2022/162283

(56) Documents cités:
- EP-A1- 3 530 506
- DE-A1- 102017 111 011
- FR-B1- 3 075 696

## Description

### Domaine technique de l'invention

L'invention concerne un dispositif d'aération pour une installation de chauffage et/ou climatisation destinée à alimenter en air une enceinte.

### Etat de la technique

Dans certains domaines techniques, comme par exemple celui des véhicules, éventuellement de type automobile, on utilise des installations de chauffage et/ou climatisation comprenant au moins un dispositif d'aération communiquant avec une enceinte devant être alimentée en air traité.

Afin, notamment, de réduire l'encombrement d'un dispositif d'aération tout en améliorant l'esthétisme de chacune de ses sorties d'air, il a été proposé de mettre en oeuvre dans un dispositif d'aération un phénomène physique appelé « effet Coanda » et consistant à induire une attraction ou un attachement d'un flux d'air à une surface convexe sur laquelle il s'écoule afin qu'il suive cette surface et subisse une déviation avant de s'en détacher avec une trajectoire différente de celle qu'il avait en amont.

Pour mettre en oeuvre cet effet Coanda, on peut, comme illustré notamment dans le document brevet FR-A1 3054491, loger à l'intérieur d'un conduit principal d'un dispositif d'aération (recevant de l'air d'une installation) un noyau (ou corps) de guidage d'air ayant une section de forme ovoïde permettant de définir deux surfaces opposées guidant l'air vers le haut et vers le bas par effet Coanda vers des sorties d'air de deux conduits secondaires qui communiquent avec l'enceinte. C'est donc le noyau à effet Coanda qui assure la fonction de diviseur de flux vers le haut et vers le bas à la place d'un premier mécanisme de déviation à volets encombrant, complexe, onéreux, relativement fragile et possiblement bruyant. Mais, lorsque l'on veut aussi obtenir un guidage de l'air vers la droite et vers la gauche, on est toujours contraint d'implanter dans le corps creux un second mécanisme de déviation à volets en amont du noyau à effet Coanda.

On notera qu'il a été proposé dans le document brevet FR-B1 3075696 d'utiliser un noyau à effet Coanda creux afin d'intégrer à l'intérieur de ce dernier des organes de contrôle du dispositif d'aération et de son installation (permettant de régler certains paramètres tels que le débit d'air de ventilation et la température de consigne), accessibles aux usagers via une paroi avant placée dans l'enceinte. Cela permet d'augmenter l'espace disponible, notamment au niveau d'une planche de bord ou d'une console centrale d'un véhicule.

Les document EP 3 530 506 et DE 10 2017 111011 décrivent des aérateurs avec un noyau séparant le flux d'air dans deux canaux, permettant de diriger le flux d'air en sortie de l'aérateur en fonction des flux d'air introduits dans chacun des canaux.

Un inconvénient du guidage par effet Coanda réside dans le fait que le placement des deux surfaces convexes du noyau dans le conduit principal induit une importante réduction de la section aéraulique entre l'amont et l'aval de ces surfaces convexes, et donc provoque l'apparition de fortes survitesses et par conséquent de bruits au niveau des sorties d'air des conduits secondaires, en raison des effets Bernoulli et Venturi. Plus le noyau creux à effet Coanda est large (pour accueillir un nombre élevé d'organes de contrôle), plus les bruits sont importants du fait de la largeur des sorties d'air des conduits secondaires qui sont partiellement définis par ce noyau creux à effet Coanda, si bien que l'on est contraint de réduire la largeur du noyau creux et donc de réduire le nombre d'organes de contrôle intégrés dans le noyau. L'invention a donc notamment pour but d'améliorer la situation.

### Présentation de l'invention

La présente invention a pour objet un dispositif d'aération pour une installation de chauffage et/ou climatisation destinée à alimenter en air une enceinte, ledit dispositif d'aération comprenant :
- un conduit principal destiné à être alimenté en air par l'installation et alimentant en air deux conduits secondaires destinés à alimenter l'enceinte,
- un noyau creux définissant deux sous-parties des conduits secondaires et comprenant une paroi avant destinée à être placée dans l'enceinte, et
- des organes de contrôle installés dans le noyau creux, accessibles via la paroi avant et permettant de contrôler le dispositif d'aération et une partie au moins de l'installation.

Le conduit principal loge en amont du noyau creux une pièce fixe qui est agencée de manière à diviser l'air issu de l'installation en deux flux d'air, et le noyau creux comprend une paroi arrière recevant les flux d'air divisés et présentant une forme arrondie propre à guider ces derniers respectivement vers les conduits secondaires. Le dispositif d'aération comprend en outre des ailettes, installées entre la pièce fixe et la paroi arrière du noyau creux, propres à contrôler l'orientation dans un second plan des flux d'air divisés avant qu'ils ne parviennent sur la paroi arrière du noyau creux, et contrôlables par l'un des organes de contrôle.

Grâce à la division des flux réalisée par la pièce fixe dans une zone amont relativement éloignée du noyau creux, il n'y a quasiment pas de perte de charge lorsque les flux d'air divisés et guidés rejoignent respectivement les deux conduits secondaires. Cette (quasi) absence de perte de charge combinée à l'absence d'effets Bernoulli et Venturi (du fait de l'absence d'effet Coanda) permettent de réduire notablement le bruit de flux, alors même que la compacité du dispositif d'aération demeure importante.

Le dispositif d'aération selon l'invention peut comporter d'autres caractéristiques qui peuvent être prises séparément ou en combinaison, et notamment :
- il peut comprendre deux volets installés respectivement dans les conduits secondaires en aval de la paroi arrière du noyau creux, propres chacun à contrôler l'orientation dans un premier plan de l'un des flux d'air divisés et guidés, et contrôlables par l'un au moins des organes de contrôle ;
- en présence de la dernière option, les volets peuvent avoir des orientations qui sont contrôlées de façon synchrone par l'un des organes de contrôle ;
- également en présence de la dernière option, chaque volet peut avoir une section dans un plan vertical de forme générale choisie dans un groupe comprenant un rectangle à coins arrondis, un ovale et une ellipse ;
- le premier plan peut être un plan vertical et le second plan peut être un plan horizontal ;
- sa pièce fixe peut avoir une section dans un plan vertical en forme générale de banane ;
- ses conduits secondaires peuvent avoir des sorties d'air situées respectivement au-dessus et en-dessous du noyau creux, et destinées à alimenter en air l'enceinte.

L'invention propose également une installation de chauffage et/ou climatisation destinée à alimenter en air une enceinte et comprenant au moins un dispositif d'aération du type de celui présenté ci-avant.

L'invention propose également un véhicule, éventuellement de type automobile, et comprenant au moins une enceinte et au moins une installation de chauffage et/ou climatisation du type de celle présentée ci-avant et destinée à alimenter en air cette enceinte.

### Brève description des figures

D'autres avantages de l'invention apparaîtront à l'examen de la description détaillée ci-après, et des dessins annexés (obtenus en CAO/DAO (« Conception Assistée par Ordinateur/Dessin Assisté par Ordinateur »), d'où la présence de certains niveaux de gris), sur lesquels :
[Fig. 1] illustre schématiquement, dans une vue de face du côté de l'habitacle, une partie d'un exemple de planche de bord d'un véhicule comprenant un exemple de réalisation d'un dispositif d'aération selon l'invention, et
[Fig. 2] illustre schématiquement, dans une vue en coupe dans un plan longitudinal et vertical, la planche de bord de la figure 1.

### Description détaillée de l'invention

L'invention a notamment pour but de proposer un dispositif d'aération DA destiné à faire partie d'une installation de chauffage et/ou climatisation devant alimenter en air traité au moins une enceinte E, et permettant de réduire les bruits des flux.

Dans ce qui suit, on considère, à titre d'exemple non limitatif, que l'installation de chauffage et/ou climatisation est destinée à équiper un véhicule V de type automobile, et donc l'enceinte E alimentée par cette installation est un habitacle. Mais l'invention n'est pas limitée à cette application. En effet, l'installation de chauffage et/ou climatisation peut équiper n'importe quel type de véhicule (terrestre, maritime (ou fluvial), ou aérien) comprenant au moins une enceinte, et n'importe quel bâtiment ou installation comprenant au moins une enceinte.

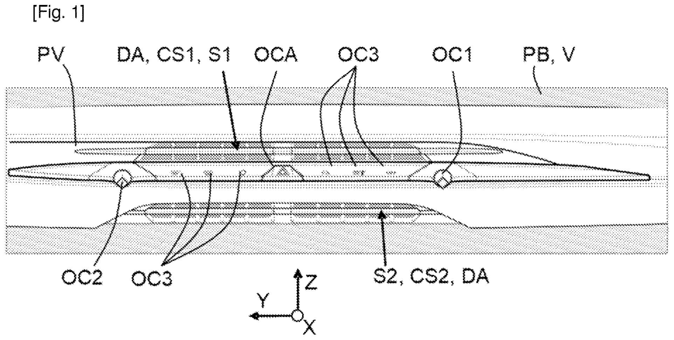

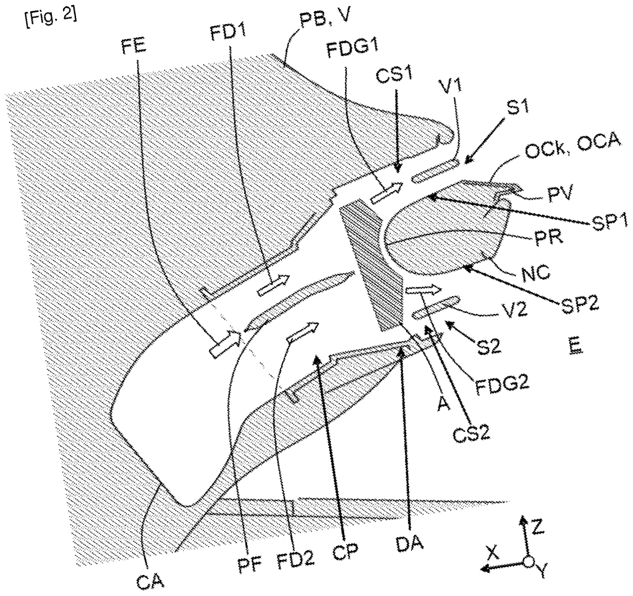

Sur les figures 1 et 2 la direction X est la direction longitudinale du véhicule V, laquelle est parallèle aux côtés latéraux comportant les portières latérales, la direction Y est la direction transversale du véhicule V, laquelle est perpendiculaire à la direction X, et la direction Z est la direction verticale du véhicule V, laquelle est perpendiculaire aux directions longitudinale X et transversale Y.

On a schématiquement illustré sur la figure 1 une partie d'un exemple de planche de bord PB d'un véhicule V comprenant un exemple de réalisation d'un dispositif d'aération DA selon l'invention, faisant partie d'une installation de chauffage et/ou climatisation. Il est rappelé que dans un véhicule V la planche de bord PB est située dans l'habitacle (ou enceinte) E, sous le pare-brise avant et en amont des sièges dits du premier rang (dont l'un est généralement occupé par un conducteur). On notera que dans un véhicule V le dispositif d'aération DA peut aussi, par exemple, faire partie d'une console centrale, couplée à la planche de bord. On notera également qu'une installation peut éventuellement comporter plusieurs (au moins deux) dispositifs d'aération DA.

Comme cela est mieux illustré sur la figure 2, un dispositif d'aération DA, selon l'invention, comprend au moins un conduit principal CP, une pièce fixe PF, deux conduits secondaires CSj (j = 1 ou 2), un noyau creux NC et des organes de contrôle OCk permettant de contrôler le dispositif d'aération DA et une partie au moins de l'installation (de chauffage et/ou climatisation).

Le conduit principal CP est destiné à être alimenté en air par l'installation (de chauffage et/ou climatisation), et est destiné à alimenter en air les deux conduits secondaires CSj qui sont destinés à alimenter l'enceinte E via deux sorties d'air Sj qu'ils comprennent respectivement. Par conséquent, ce conduit principal CP est solidarisé fixement à un conduit d'alimentation CA de l'installation qui lui fournit un flux d'air entrant FE. Ce conduit d'alimentation CA peut être rapporté (ici) dans la planche de bord PB ou bien peut être un espace creux défini dans la planche de bord PB (par exemple lors du moulage).

Ce conduit principal CP loge en amont du noyau creux NC une pièce fixe PF qui est agencée de manière à diviser l'air (ou flux d'air entrant FE) issu de l'installation en deux flux d'air divisés FDj (soit FD1 et FD2).

Le noyau creux NC comprend deux portions de paroi qui définissent respectivement deux sous-parties SPj des conduits secondaires CSj, une paroi avant PV qui est destinée à être placée dans l'enceinte E, et une paroi arrière PR qui reçoit les flux d'air divisés FDj issus du conduit principal CP. Ces deux portions de paroi prolongent la paroi arrière PR, de part et d'autre, vers les sorties d'air Sj et donc vers l'enceinte E.

La paroi arrière PR du noyau creux NC présente une forme arrondie qui est propre à guider les flux d'air divisés FDj respectivement vers les conduits secondaires CSj. Il est important de noter que cette forme arrondie n'est pas une forme ovoïde destinée à induire un effet Coanda sur deux surfaces opposées. La paroi arrière PR du noyau creux NC ne sert donc pas à plaquer contre elle les flux d'air divisés FDj pour les accélérer et leur faire subir des déviations avant qu'ils ne s'en détachent avec des trajectoires différentes de celles qu'ils avaient en amont. Ici, la paroi arrière PR du noyau creux NC sert uniquement à guider (ou contraindre) les deux flux d'air divisés FDj (définis en amont) à s'engager respectivement dans les deux conduits secondaires CSj pour rejoindre leurs sorties Sj. En d'autres termes, elle (PR) permet de transmettre des flux d'air divisés et guidés FDGj respectivement aux deux conduits secondaires CSj.

De plus, les organes de contrôle OCk précités sont installés dans le noyau creux NC et sont accessibles via la paroi avant PV de ce dernier (NC) en vue d'être actionnés par un usager présent dans l'enceinte E.

Grâce à la pièce fixe PF installée en amont du noyau creux NC, la division du flux d'air entrant FE en deux flux d'air divisés FDj n'est pas réalisée par la paroi arrière PR du noyau creux NC à l'endroit où la section de circulation des flux est notablement réduite. Cette division est en effet réalisée par la pièce fixe PF dans une zone amont relativement éloignée de la paroi arrière PR, et donc il n'y a quasiment pas de perte de charge lorsque les flux d'air divisés et guidés FDj rejoignent respectivement les deux conduits secondaires CSj. Ce sont cette (quasi) absence de perte de charge et cette absence d'effets Bernoulli et Venturi (du fait de l'absence d'effet Coanda) qui permettent de réduire notablement le bruit de flux, alors même que la compacité du dispositif d'aération DA demeure importante (au moins suivant la direction longitudinale X). De plus, les bruit de flux étant notablement réduits, on n'est pas obligé de restreindre la largeur du noyau creux NC suivant la direction transversale Y, si bien qu'il peut intégrer un nombre relativement important d'organes de contrôle OCk. Ainsi, dans l'exemple illustré non limitativement sur la figure 1, huit organes de contrôle OCk (k = 1 à 3) du dispositif d'aération DA et de l'installation sont intégrés dans le noyau creux NC et accessibles et actionnables via sa paroi avant PV, et un autre organe de contrôle OCA (par exemple permettant d'activer/désactiver la fonction de signalisation d'un arrêt d'urgence) est aussi intégré dans le noyau creux NC et accessible et actionnable via sa paroi avant PV.

On notera, comme illustré non limitativement sur la figure 2, que la pièce fixe PF peut, par exemple, avoir une section dans le plan vertical XZ en forme générale de banane. Mais cette section pourrait présenter d'autres formes générales selon les agencements relatifs du conduit principal CP et des conduits secondaires CSj.

On notera également, comme illustré non limitativement sur la figure 2, que le dispositif d'aération DA peut aussi comprendre deux volets Vj installés respectivement dans les deux conduits secondaires CSj en aval de la paroi arrière PR du noyau creux NC. Ces deux volets Vj sont propres chacun à contrôler l'orientation dans un premier plan (ici XZ) de l'un des flux d'air divisés et guidés FDGj, et sont contrôlables par l'un au moins des organes de contrôle OCk.

Par exemple, ces deux volets Vj peuvent avoir des orientations qui sont contrôlées de façon synchrone par l'un des organes de contrôle OCk (par exemple OC1 (k = 1)). Mais dans une variante de réalisation les deux volets Vj pourraient avoir des orientations contrôlées de façon indépendante par deux organes de contrôle OCk.

Egalement par exemple, et comme illustré non limitativement sur la figure 2, chaque volet Vj peut avoir une section dans un plan vertical (ici XZ) en forme générale de rectangle à coins arrondis. Mais cette section peut avoir d'autres formes générales, comme par exemple une forme d'ovale ou d'ellipse. Chaque volet Vj a une longueur suivant la direction transversale Y qui est sensiblement égale à la largeur de la sortie d'air Sj voisine du conduit secondaire CSj qui le loge. La présence d'un unique volet Vj visible par les usagers dans chaque sortie d'air Sj permet de conférer de l'élégance et possiblement de la finesse lorsque la hauteur de chaque sortie d'air Sj suivant la direction verticale Z est petite, ce qui contribue à renforcer l'impression de qualité (ici du véhicule V).

On notera également, comme illustré non limitativement sur la figure 2, que le dispositif d'aération DA comprend des ailettes A installées entre la pièce fixe PF et la paroi arrière PR du noyau creux NC. Ces ailettes A sont propres à contrôler l'orientation dans un second plan (ici XY), par exemple perpendiculaire au premier plan (ici XZ), des flux d'air divisés FDj avant qu'ils ne parviennent sur la paroi arrière PR du noyau creux NC. Par ailleurs, ces ailettes A sont contrôlables par l'un des organes de contrôle OCk (par exemple OC2 (k = 2)).

Grâce à cet agencement, les ailettes A sont invisibles par les usagers placés dans l'enceinte E (ici devant la planche de bord PB).

Dans l'exemple illustré non limitativement sur la figure 2, le premier plan est le plan vertical XZ et le second plan est le plan horizontal XY. En d'autres termes les volets Vj permettent ici d'orienter les flux d'air divisés et guidés FDGj vers le haut et vers le bas, alors que les ailettes A permettent d'orienter les flux d'air divisés et guidés FDGj vers la droite et vers la gauche. Mais l'inverse pourrait être obtenu en imposant une rotation de 90° aux axes de rotation des volets Vj et des ailettes A.

L'agencement décrit ci-avant, et illustré non limitativement sur la figure 2, est particulièrement bien adapté au cas où les sorties d'air S1 et S2 des conduits secondaires CS1 et CS2 sont situées respectivement au-dessus et en-dessous du noyau creux NC. Mais d'autres agencements peuvent être envisagés, et notamment un agencement dans lequel les sorties d'air S1 et S2 des conduits secondaires CS1 et CS2 sont situées respectivement à droite et à gauche du noyau creux NC.

On notera également que la paroi avant PV, qui comprend une partie accessible et actionnable des organes de contrôle OCk et OCA, peut éventuellement participer au style d'une partie au moins de la planche de bord PB (ici) ou d'une console centrale.

## Revendications

1. Dispositif d'aération (DA) pour une installation de chauffage et/ou climatisation destinée à alimenter en air une enceinte (E), ledit dispositif d'aération (DA) comprenant :
- un conduit principal (CP) destiné à être alimenté en air par ladite installation et alimentant en air deux conduits secondaires (CS1, CS2) destinés à alimenter ladite enceinte (E),
- un noyau creux (NC) définissant deux sous-parties (SP1, SP2) desdits conduits secondaires (CS1, CS2) et comprenant une paroi avant (PV) destinée à être placée dans ladite enceinte (E), et
- des organes de contrôle (OC1, OC2, OC3) installés dans ledit noyau creux (NC), accessibles via ladite paroi avant (PV) et permettant de contrôler ledit dispositif d'aération (DA) et une partie au moins de ladite installation, ledit conduit principal (CP) logeant en amont dudit noyau creux (NC) une pièce fixe (PF) agencée de manière à diviser ledit air issu de ladite installation en deux flux d'air, et ledit noyau creux (NC) comprenant une paroi arrière (PR) recevant lesdits flux d'air divisés et présentant une forme arrondie propre à guider ces derniers respectivement vers lesdits conduits secondaires (CS1, CS2), **caractérisé en ce que** le dispositif d'aération (DA) comprend en outre des ailettes (A), installées entre ladite pièce fixe (PF) et ladite paroi arrière (PR) du noyau creux (NC), propres à contrôler l'orientation dans un second plan desdits flux d'air divisés avant qu'ils ne parviennent sur ladite paroi arrière (PR) du noyau creux (NC), et contrôlables par l'un desdits organes de contrôle (OC2).

2. Dispositif d'aération (DA) selon la revendication 1, **caractérisé en ce qu'**il comprend deux volets (V1, V2) installés respectivement dans lesdits conduits secondaires (CS1, CS2) en aval de ladite paroi arrière (PR) du noyau creux (NC), propres chacun à contrôler l'orientation dans un premier plan de l'un desdits flux d'air divisés et guidés, et contrôlables par l'un au moins desdits organes de contrôle (OC1).

3. Dispositif d'aération (DA) selon la revendication 2, **caractérisé en ce que** lesdits volets (V1, V2) ont des orientations qui sont contrôlées de façon synchrone par l'un desdits organes de contrôle (OC1).

4. Dispositif d'aération (DA) selon la revendication 2 ou 3, **caractérisé en ce que** chaque volet (V1, V2) a une section dans un plan vertical de forme générale choisie dans un groupe comprenant un rectangle à coins arrondis, un ovale et une ellipse.

5. Dispositif d'aération (DA) selon l'une des revendications à 4, **caractérisé en ce que** ledit premier plan est un plan vertical et ledit second plan est un plan horizontal.

6. Dispositif d'aération (DA) selon l'une des revendications 1 à 5, **caractérisé en ce que** ladite pièce fixe (PF) a une section dans un plan vertical en forme générale de banane.

7. Dispositif d'aération (DA) selon l'une des revendications 1 à 6, **caractérisé en ce que** lesdits conduits secondaires (CS1, CS2) ont des sorties d'air (S1, S2) situées respectivement au-dessus et en-dessous dudit noyau creux (NC), et destinées à alimenter en air ladite enceinte (E).

8. Installation de chauffage et/ou climatisation destinée à alimenter en air une enceinte (E), **caractérisée en ce qu'**elle comprend au moins un dispositif d'aération (DA) selon l'une des revendications précédentes.

9. Véhicule comprenant au moins une enceinte (E), **caractérisé en ce qu'**il comprend en outre au moins une installation de chauffage et/ou climatisation selon la revendication 8, destinée à alimenter en air ladite enceinte (E).

## Patentansprüche

1. Lüftungsvorrichtung (DA) für eine Heizungs- und/oder Klimaanlage zur Versorgung eines Raumes (E) mit Luft, wobei die Lüftungsvorrichtung (DA) einschließlich:
- eine Hauptleitung (CP), die von der Anlage mit Luft versorgt wird und zwei Nebenleitungen (CS1, CS2) zur Versorgung der Kammer (E) mit Luft versorgt,
- einen hohlen Kern (NC), der zwei Unterteile (SP1, SP2) der Sekundärrohre (CS1, CS2) definiert und eine Vorderwand (PV) zur Anordnung in dem Gehäuse (E) aufweist, und
- in dem hohlen Kern (NC) angeordnete Kontrollorgane (OC1, OC2, OC3), die über die vordere Wand (PV) zugänglich sind und die die Steuerung der Belüftungsvorrichtung (DA) und zumindest eines Teils der Anlage ermöglichen,
der Hauptkanal (CP), der stromaufwärts des hohlen Kerns (NC) ein feststehendes Teil (PF) aufnimmt, das so angeordnet ist, dass es die aus der Anlage kommende Luft in zwei Luftströme teilt, und der hohle Kern (NC) eine Rückwand (PR) aufweist, die die unterteilten Luftströme aufnimmt und eine abgerundete Form aufweist, die geeignet ist, diese jeweils zu den sekundären Kanälen (CS1, CS2) zu führen, **dadurch gekennzeichnet, dass** die Belüftungsvorrichtung (DA) ferner Rippen (A) aufweist, die zwischen dem feststehenden Teil (PF) und der Rückwand (PR) des hohlen Kerns (NC) angeordnet sind und geeignet sind, die Ausrichtung in einer zweiten Ebene der Ströme zu steuern Luftzufuhr, die vor dem Eintritt in die Rückwand (PR) des hohlen Kerns (NC) aufgeteilt und durch eines der Steuerorgane (OC2) steuerbar ist.

2. Belüftungsvorrichtung (DA) nach Anspruch 1, **dadurch gekennzeichnet, dass** sie zwei Klappen (V1, V2) umfasst, die jeweils in den Sekundärkanälen (CS1, CS2) stromabwärts der Rückwand (PR) des hohlen Kerns (NC) installiert sind, die jeweils geeignet sind, die Orientierung eines der geteilten und geführten Luftströme in einer ersten Ebene zu steuern, und die durch mindestens eines der Steuerorgane (OC1) steuerbar sind.

3. Belüftungsvorrichtung (DA) nach Anspruch 2, **dadurch gekennzeichnet, dass** die Klappen (V1, V2) Ausrichtungen aufweisen, die synchron durch eines der Steuerelemente (OC1) gesteuert werden.

4. Belüftungsvorrichtung (DA) nach Anspruch 2 oder 3, **dadurch gekennzeichnet, dass** jede Klappe (V1, V2) einen Querschnitt in einer vertikalen Ebene mit einer allgemeinen Form aufweist, die aus einer Gruppe ausgewählt ist, die ein Rechteck mit abgerundeten Ecken, ein Oval und eine Ellipse umfasst.

5. Belüftungsvorrichtung (DA) nach einem der Ansprüche 2 bis 4, **dadurch gekennzeichnet, dass** die erste Ebene eine vertikale Ebene und die zweite Ebene eine horizontale Ebene ist.

6. Belüftungsvorrichtung (DA) nach einem der Ansprüche 1 bis 5, **dadurch gekennzeichnet, dass** das feststehende Teil (PF) einen Querschnitt in einer vertikalen Ebene in der allgemeinen Form einer Banane aufweist.

7. Belüftungsvorrichtung (DA) nach einem der Ansprüche 1 bis 6, **dadurch gekennzeichnet, dass** die Sekundärrohre (CS1, CS2) Luftauslässe (S1, S2) haben, die sich jeweils oberhalb und unterhalb des hohlen Kerns (NC) befinden und dazu bestimmt sind, die Kammer (E) mit Luft zu versorgen.

8. Heiz- und/oder Klimaanlage zur Versorgung eines Raums (E) mit Luft, **dadurch gekennzeichnet, dass** sie mindestens eine Belüftungsvorrichtung (DA) nach einem der vorhergehenden Ansprüche umfasst.

9. Fahrzeug mit mindestens einem Gehäuse (E), **dadurch gekennzeichnet, dass** es außerdem mindestens eine Heiz- und/oder Klimaanlage nach Anspruch 8 umfasst, die dazu bestimmt ist, dem Gehäuse (E) Luft zuzuführen.

## Claims

1. Aeration device (DA) for a heating and/or air conditioning installation intended to supply air to an enclosure (E), said aeration device (DA) including:
- main duct (CP) intended to be supplied with air by said installation and supplying with air two secondary ducts (CS 1, CS 2) intended to supply said enclosure (E),
- hollow core (NC) defining two sub-parts (SP 1, SP 2) of said secondary ducts (CS 1, CS 2) and comprising a front wall (PV) intended to be placed in said enclosure (E), and
- control members (OC1, OC2, OC3) installed in said hollow core (NC), accessible via said front wall (PV) and enabling said aeration device (DA) and at least part of said installation to be controlled,
the said main duct (CP) accommodating upstream of said hollow core (NC) a fixed part (PF) arranged so as to divide said air coming from said installation into two air flows, and said hollow core (NC) comprising a rear wall (PR) receiving said divided air flows and having a rounded shape suitable for guiding the latter respectively towards said secondary ducts (CS1, CS2), **characterized in that** the aeration device (DA) further comprises fins (A), installed between said fixed part (PF) and said rear wall (PR) of the hollow core (NC), suitable for controlling the orientation in a second plane of said air flows referred to before they reach said rear wall (PR) of the hollow core (NC), and controllable by one of said control members (OC2).

2. Aeration device (DA) according to claim 1, **characterized in that** it comprises two flaps (V1, V2) installed respectively in said secondary ducts (CS1, CS2) downstream of said rear wall (PR) of the hollow core (NC), each capable of controlling the orientation in a first plane of one of said divided and guided airflows, and controllable by at least one of said control members (OC1).

3. Aeration device (DA) according to Claim 2, **characterized in that** the said flaps (V1, V2) have orientations which are controlled synchronously by one of the said control members (OC1).

4. Ventilation device (DA) according to Claim 2 or 3, **characterized in that** each flap (V1, V2) has a section in a vertical plane of general shape chosen from a group comprising a rectangle with rounded corners, an oval and an ellipse.

5. Aeration device (DA) according to one of Claims 2 to 4, **characterized in that** the said first plane is a vertical plane and the said second plane is a horizontal plane.

6. Aeration device (DA) according to one of Claims 1 to 5, **characterized in that** the said fixed part (PF) has a section in a vertical plane in the general shape of a banana.

7. Aeration device (DA) according to one of Claims 1 to 6, **characterized in that** the said secondary ducts (CS1, CS2) have air outlets (S1, S2) situated respectively above and below the said hollow core (NC) and intended to supply air to the said enclosure (E).

8. Heating and/or air-conditioning installation intended to supply air to an enclosure (E), **characterized in that** it comprises at least one aeration device (DA) according to one of the preceding claims.

9. Vehicle comprising at least one enclosure (E), **characterized in that** it further comprises at least one heating and/or air-conditioning installation according to claim 8, intended to supply said enclosure (E) with air.
